# EUROPÄISCHE PATENTANMELDUNG

(11) **EP 4 819 260 A1**
(43) Veröffentlichungstag der Anmeldung: **07.10.2026**
(21) Anmeldenummer: 26168955.8
(22) Anmeldetag: 30.03.2026
(51) Int. Cl.: H01M 8/1213, C25B 1/04, H01M 8/1226, H01M 8/1253, H01M 8/1286

(54) **ELEKTROCHEMISCHE ZELLE, VERFAHREN ZUR HERSTELLUNG EINER ELEKTROCHEMISCHEN ZELLE UND ELEKTROLYSEZELLENVORRICHTUNG**

(30) Priorität: 31.03.2025 DE 102025112396
(71) Anmelder: Robert Bosch GmbH, 70442 Stuttgart (DE)
(72) Erfinder: Klein, Stefan, 71116 Gaertringen (DE); Willeck, Hannes, 71272 Renningen (DE); Lucas, Susanne, 70839 Gerlingen (DE); Fotler, Arthur, 70499 Stuttgart (DE); Feuerfeil, Rainer, 70839 Gerlingen (DE); Fernandez Romero, Isabel, 70190 Stuttgart (DE)

(57) **Zusammenfassung**

Die Erfindung betrifft eine Elektrochemische Zelle (12), insbesondere Elektrolysezelle (14), aufweisend ein Zellsubstrat (16), eine erste Elektrodenschicht (26), eine zweite Elektrodenschicht (32), eine zwischen der ersten Elektrodenschicht (26) und zweiten Elektrodenschicht (32) angeordnete Elektrolytschicht (28), wobei das Zellsubstrat (16) flächig ausgebildet ist und eine Mehrzahl an Strukturelementen (20) aufweist. Es wird vorgeschlagen, dass sich die Strukturelemente (20) in das Zellsubstrat (16) hinein absenken und jeweils eine Erstreckung (34) zwischen 20% und 80% einer Substratdicke (36) des Zellsubstrats (16) aufweisen, bevorzugt zwischen 30% und 70%, besonders bevorzugt zwischen 40% und 60%.

## Beschreibung

Die Erfindung betrifft eine elektrochemische Zelle, insbesondere Elektrolysezelle, mit Strukturelementen nach Gattung des unabhängigen Anspruchs. Die Erfindung betrifft weiterhin ein Verfahren zur Herstellung der elektrochemischen Zelle sowie eine Elektrolysezellenvorrichtung.

### Stand der Technik

Festoxidbrennstoffzellen (SOFC) und Festoxidelektrolysezellen (SOEC) gelten als vielversprechende Technologien für eine effiziente und nachhaltige Energieumwandlung. Ein wesentliches Kriterium für die Leistungsfähigkeit dieser Zellen ist die Leistungsdichte, die maßgeblich von den ohmschen Widerständen und den Polarisationswiderständen innerhalb der Zelle beeinflusst wird. Besonders bei niedrigeren Betriebstemperaturen, beispielsweise unter 700°C bei metallgestützten Zellen, stellen diese Widerstände eine erhebliche Limitierung dar.

Im Stand der Technik zur Herstellung von SOFC und SOEC werden die verschiedenen Schichten der Zelle, wie Anode, Elektrolyt und Kathode, mittels Druckverfahren, Schlitzgießen oder Spritzverfahren aufgebracht. Dabei wird angestrebt, eine möglichst gleichmäßige Schichtdicke zu erzielen.

### Offenbarung der Erfindung

### Vorteile

Die vorliegende Erfindung beschreibt eine elektrochemische Zelle, insbesondere Elektrolysezelle, aufweisend ein Zellsubstrat, eine erste Elektrodenschicht, eine zweite Elektrodenschicht, eine zwischen der ersten Elektrodenschicht und zweiten Elektrodenschicht angeordnete Elektrolytschicht, wobei das Zellsubstrat flächig ausgebildet ist und eine Mehrzahl an Strukturelementen aufweist. Erfindungsgemäß weist die Zelle die Besonderheit auf, dass sich die Strukturelemente in das Zellsubstrat hinein absenken und jeweils eine Erstreckung zwischen 20% und 80% einer Substratdicke des Zellsubstrats aufweisen, bevorzugt zwischen 30% und 70%, besonders bevorzugt zwischen 40% und 60%.

Durch die Strukturelemente in das Zellsubstrat wird die aktive Fläche der Zelle, also die Fläche, an der die elektrochemischen Reaktionen stattfinden, gegenüber den flachen, unstrukturierten Zellen aus dem Stand der Technik vergrößert. Dies ermöglicht eine verbesserte Leistungsdichte und Effizienz der elektrochemischen Zelle.

Unter einer elektrochemischen Zelle soll dabei insbesondere eine Anordnung verstanden werden, welche durch chemische Reaktionen eine nutzbare elektrische Energie bereitstellen oder zur chemischen Gewinnung bzw. Umsetzung von Stoffen durch Anlegen einer Anspannung vorgesehen sind. Eine elektrochemische Zelle weist wenigstens drei Funktionsschichten auf. Die Funktionsschichten umfassen wenigstens zwei Elektrodenschichten und eine Trennschicht bzw. Elektrolytschicht. Die Elektrodenschichten haben jeweils die Funktion eines Elektronenleiters. Auch wichtig für die Elektrodenschichten ist der Ionentransport und eine katalytische Aktivität bzw. Sauerstoffaustausch-Kapazität zwischen Elektrodenschicht und Gasphase. Die Trennschicht bzw. Elektrolytschicht hat insbesondere die Funktion eines Ionenleiters, insbesondere von Sauerstoffionen. Weiterhin ist die Trennschicht bzw. Elektrolytschicht für die Trennung der zwei Gasräume vorgesehen, beispielsweise die Trennung zwischen Luft und Brenngas in einer Brennstoffzelle.

Insbesondere soll unter einer elektrochemischen Zelle eine Brennstoffzelle oder eine Elektrolysezelle verstanden werden. Unter einer Brennstoffzelle oder einer Elektrolysezelle soll in diesem Zusammenhang insbesondere zumindest ein Teil, insbesondere eine Unterbaugruppe, eines Brennstoffzellensystems, insbesondere einer Festoxidbrennstoffzellensystems, und/oder einer Elektrolysezellenvorrichtung, insbesondere eines Hochtemperaturelektrolyseurs, verstanden werden. Insbesondere kann die elektrochemische Zelle auch die gesamte Brennstoffzelle, insbesondere die gesamte Festoxidbrennstoffzelle, den gesamten Elektrolyseur, insbesondere den gesamten Hochtemperaturelektrolyseur, einen Stack aus mehreren aufeinandergestapelten Brennstoffzellen und/oder Elektrolysezellen und/oder einen Verbund mehrerer Stacks aus Brennstoffzellen und/oder Elektrolysezellen umfassen.

Vorzugsweise ist die elektrochemische Zelle dazu vorgesehen, einen Brennstoff unter Zuführung eines Oxidans in einem elektrochemischen Verbrennungsprozess zu einer elektrischen Energiegewinnung umzusetzen. Alternativ oder zusätzlich ist die elektrochemische Zelle dazu vorgesehen, in einem Trennungsprozess unter Zuführung elektrischer Energie ein Fluid in zumindest zwei Bestandteile zu zerteilen. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Erfindungsgemäß umfasst die elektrochemische Zelle zumindest drei Funktionsschichten. Vorzugsweise soll unter einer Funktionsschicht insbesondere eine Schicht verstanden werden, die unmittelbar an dem mittels der elektrochemischen Zelle durchgeführten elektrochemischen Umsetzungsprozess und/oder dem Trennungsprozess beteiligt ist. Insbesondere sind vorzugsweise zwei der Funktionsschichten als Elektrodenschicht ausgebildet, insbesondere zu einer Verwendung als Kathode und/oder Anode. Vorzugsweise ist zumindest eine Elektrodenschicht als Oxidanselektrode bzw. Luftelektrode, insbesondere zu einem Kontakt mit dem Oxidans und/oder einem Spaltprodukt, ausgebildet. Vorzugsweise ist zumindest eine Elektrodenschicht als Brennstoffelektrode, insbesondere zu einem Kontakt mit dem Brennstoff und/oder einem weiteren Spaltprodukt, ausgebildet. Vorzugsweise ist zumindest eine Funktionsschicht als Elektrolytschicht ausgebildet. Vorzugsweise wird zumindest eine Trennschicht an zumindest einer Elektrodenschicht, insbesondere zwischen zwei Elektrodenschichten, angeordnet.

Ein Zellsubstrat kann insbesondere ein gesintertes oder ungesintertes keramisches oder metall-keramisches Substrat aufweisen. Es ist auch möglich, dass das Zellsubstrat ein gesintertes oder ungesintertes pulvermetallisches Substrat aufweist. Es ist auch denkbar, dass das Zellsubstrat zumindest abschnittsweise ein Metall aufweist, beispielsweise kann das Zellsubstrat ein Blech mit gebohrten, geätzten und/oder gestanzten Löchern, und/oder ein Streckmetall, Schaum, Netz/Gewebe oder dergleichen aufweisen. Insbesondere kann das Zellsubstrat stark porös bzw. großporig ausgebildet sein und/oder Öffnungen aufweisen, beispielsweise kann das Zellsubstrat Netze, gebohrte oder geätzte Löcher oder dergleichen aufweisen. Vorteilhaft ist das Zellsubstrat vollständig aus Metall ausgebildet. Vorteilhaft weist das Zellsubstrat einen ferritischen Stahl mit einem Chromanteil von über 15% auf.

Es ist denkbar, dass Zellsubstrat optional zusätzliche Funktionsschichten aufweist, insbesondere Funktionsschichten, welche zwischen dem Zellsubstrat und der ersten Elektrodenschicht angeordnet sind. Beispielsweise sind als zusätzliche Funktionsschichten Kontaktschichten zur Verringerung des Kontaktwiderstandes - beispielsweise CrMn oder (Cr, Fe, Cu, Co)-Spinelle - Schutzschichten gegen Cr-Verdampfung aus dem Zellsubstrat - beispielsweise CeCo, CeCu, Co und/oder Cu - und/oder eine Oxidationsschutzschicht - beispielsweise Ti, Al und/oder Si-Oxid.

Vorteilhaft ist die erste Elektrodenschicht eine Brenngaselektrodenschicht. Bevorzugt weist die erste Elektrodenschicht eine Mischung von Ni oder NiO mit dotiertem Ceroxid, z.B. Gd-dotiertes Ceroxid (CGO) oder Sm-dotiertes Ceroxid (SDC) auf. Es ist auch denkbar, dass die erste Elektrodenschicht eine Mischung von Ni oder NiO mit stabilisiertem Zirkoniumoxid aufweisen, insbesondere Zirkoniumoxid stabilisiert mit Sc, Y und/oder Ce, beispielsweise Scandium-stabilisiertes Zirkoniumoxid (ScSZ), Yttriumstabilisiertes Zirkoniumoxid (YSZ), Scandium/Yttrium-stabilisiertes Zirkoniumoxid (ScYSZ), Scandium/Cer-stabilisiertes Zirkoniumoxid (ScCeSZ) oder dergleichen. Es ist auch möglich, dass die erste Elektrodenschicht jeweils Oxide mit einer PerowskitStruktur aufweist, beispielsweise La(Sr)Ga(Mg)O3-δ, SrCe(Yb)O3-δ oder La-Ca-Cr-Oxid, optional gemischt mit dotiertem Ceroxid oder stabilisiertem Zirkoniumoxid.

Als besonders vorteilhafte Elemente für die zweite Dotierung mit wenigstens einem Übergangsmetall aus der fünften oder sechsten Nebengruppe des Periodensystems haben sich Niob (Nb), Wolfram (W), Vanadium (V), Molybdän (Mo) und/oder Tantal (Ta) erwiesen.

Die erste Elektrodenschicht kann eine suspensionsbasierte Schicht sein. Auf diese Weise lassen sich vorteilhafte Schichtdicken besonders einfach und zuverlässig realisieren. Beispielsweise kann die erste Elektrodenschicht mittels Siebdruck abgeschieden werden. Aber auch andere Prozesse, wie Tiefdruck, Flexodruck, Tampondruck, ein Sprühprozess, Foliengießen oder slot-die-coating coating bzw. Schlitzdüsen-Beschichtung sind für das Aufbringen der ersten Elektrodenschicht denkbar. Es ist auch denkbar, dass die erste Elektrodenschicht PVD-Spritzverfahren - beispielsweise Plasmaspritzen - aufgebracht wird. Anschließen kann die so aufgebrachte Schicht gesintert werden.

In Varianten ist denkbar, dass die erste Elektrodenschicht aus mehreren Lagen besteht. Auf diese Weise ist es möglich, die Porosität und Oberflächentopographie der ersten Elektrodenschicht optimal für die Abscheidung der Elektrolytschicht einzustellen.

Optional ist es möglich, dass zwischen dem Zellsubstrat und der ersten Elektrodenschicht eine Barriereschicht angeordnet ist. Beispielsweise kann das Zellsubstrat ein Metalloxid als Barriereschicht aufweisen. Die Barriereschicht ist als chemische Barriere zur ersten Elektrodenschicht vorgesehen. Beispielsweise kann das Metalloxid der Barriereschicht aus CGO ausgebildet. In Varianten weist die Barriereschicht ein Spinell auf.

Die Beschichtung der Barriereschicht kann zum Beispiel mittels eines Dünnschicht-Prozesses, beispielhaft mit der PVD-Methode "Magnetron Sputtering" erfolgen. In alternativen Verfahren kann die Beschichtung beispielsweise mittels suspensionsbasierten Prozessen, wie etwa Siebdruck oder Suspensionssprühen erfolgen.

Die Elektrolytschicht weist vorteilhaft ein wenigstens mit Scandium (Sc) stabilisiertes Zirkoniumoxid auf. Die Elektrolytschicht kann durch einen Sputterprozess oder eine andere Dünnschichtmethode abgeschieden werden, es ist aber auch denkbar, dass die Elektrolytschicht mittels Siebdruck aufgebracht wird. Aber auch andere Prozesse, wie Tiefdruck, Flexodruck, Tampondruck, ein Sprühprozess, Foliengießen oder slot-die-coating coating bzw. Schlitzdüsen-Beschichtung sind denkbar.

Ein Beispiel für Dünnschicht-Methoden zur Schichtabscheidung ist PVD bzw. physikalische Gasphasenabscheidung, wie beispielsweise Magnetronsputtern oder reaktives Magnetronsputtern, High Power Impulse Magentron Sputtering (HiPIMS), Gasfluss-Sputtern oder (plasmaunterstützte) Elektronenstrahlverdampfung. Ein weiteres Beispiel für Dünnschicht-Methoden zur Schichtabscheidung ist CVD bzw. chemische Gasphasenabscheidung, wie beispielsweise metallorganische CVD, plasmaunterstützte CVD oder laserunterstützte CVD. Auch die Atomic Layer Deposition (ALD), die potenziell sehr dünne dichte Schichten über mehrstufige chemische Schichtabscheidung erzeugen kann, fällt in diese Kategorie. Weitere Beispiel für Dünnschicht-Methoden zur Schichtabscheidung sind Partikel-basierte (Vakuum-) Spritzverfahren wie Aerosol-Deposition, oder neuartige Verfahren des Plasmaspritzens oder des thermischen Plasmaspritzens.

Die Elektrolytschicht kann optional aus mehreren funktionalen Schichten bestehen, beispielsweise einer ionenleitenden Schicht und einer Diffusionsbarriereschicht.

Vorteilhaft ist die zweite Elektrodenschicht die Luftelektrode. Vorteilhaft kann die zweite Elektrodenschicht mit einem suspensionsbasierten Prozess abgeschieden werden, insbesondere mit einem Druckprozess, beispielsweise Siebdruck. Die zweite Elektrodenschicht kann beispielsweise Oxide mit Perowskitstruktur aufweisen, beispielsweise La-Sr-Co-Oxid (LSC), La-Sr-Co-Fe-Oxid (LSCF), La-Sr-Mn-Oxid (LSM). Die zweite Elektrodenschicht kann auch beispielsweise Oxide mit Perowskitstruktur kombiniert bzw. gemischt mit dotiertem Ceroxid - beispielsweise CGO, SDC - und/oder kombiniert bzw. gemischt mit stabilisiertem Zirkoniumoxid, wie YSZ, ScSZ, ScYSZ, ScCeSZ und dergleichen, aufweisen.

Es ist von Vorteil, wenn an der zweiten Elektrodenschicht eine Stromsammler-Schicht bzw. Kontaktschicht angeordnet ist. Bevorzugt wird die Stromsammler-schicht bzw. Kontaktschicht auf der zweiten Elektrodenschicht mit einem suspensionsbasierten Prozess abgeschieden. Die Stromsammler-Schicht bzw. Kontaktschicht kann zum Beispiel LSC aufweisen. Vorteilhaft wird die Stromsammler-Schicht bzw. Kontaktschicht mit Siebdruck aufgetragen. Aber auch andere Prozesse, wie Tiefdruck, Flexodruck, Tampondruck, ein Sprühprozess, Foliengießen oder slot-die-coating coating bzw. Schlitzdüsen-Beschichtung sind für das Aufbringen der Stromsammler-Schicht bzw. Kontaktschicht denkbar.

In vorteilhaften Varianten kann zwischen der Elektrolytschicht und der zweiten Elektrodenschicht eine zweite Barriereschicht angeordnet wird. Insbesondere ist die zweite Barriereschicht als chemische Barriere vorgesehen. Beispielsweise kann eine Elektrolytschicht aufweisend stabilisiertes Zirkoniumoxid mittels einer dünnen zweiten Barriereschicht, aufweisend dotiertes Ceroxid geschützt werden, die das Zirkoniumoxid beispielsweise gegen eine Reaktion mit einer im Zellverbund angrenzenden Sr-haltigen zweiten Elektrodenschicht schützt. Vorteilhaft weist die zweite Barriereschicht eine Schichtdicke zwischen 0,05 µm und 5,0 µm auf, bevorzugt zwischen 0,1 µm und 2,0 µm, besonders bevorzugt zwischen 0,5 µm und 1,0 µm auf. Besonders vorteilhaft wird die zweite Barriereschicht mit einer Dünnschicht-Methode aufgebracht.

Unter einem Strukturelement soll im Kontext der vorliegenden Erfindung insbesondere eine Vertiefung in der Oberfläche des Zellsubstrats verstanden werden, die sich in das Substrat hinein absenkt und so die aktive Oberfläche der elektrochemischen Zelle vergrößert. Ein Strukturelement kann dabei verschiedene geometrische Formen annehmen und unterschiedliche Abmessungen aufweisen, stets jedoch als Vertiefung im Substrat ausgebildet sein. Die Größe der Strukturelemente ist an die Schichtdicke der aufgebrachten Schichten, insbesondere der ersten Elektrodenschicht, angepasst und trägt so zu einer Verbesserung der elektrochemischen Leistung bei. Konkret können Strukturelemente gemäß der vorliegenden Erfindung beispielsweise als Gruben oder Rillen, oder eine Kombination aus Gruben und Rillen, ausgebildet sein. Diese können eindimensional, wie beispielsweise einfache, parallele Rillen, oder zweidimensional, wie beispielsweise sich kreuzende Rillen, angeordnet sein. Die Strukturelemente können sowohl auf einer Seite als auch auf beiden Seiten des Zellsubstrats vorhanden sein. Durch die Strukturierung des Substrats mit diesen Vertiefungen wird eine signifikante Vergrößerung der aktiven Oberfläche der elektrochemischen Zelle erreicht, was zu einer verbesserten Leistungsdichte und Effizienz führt.

Darunter, dass das Zellsubstrat flächig ausgebildet ist, soll im Kontext der vorliegenden Erfindung insbesondere ein Substrat verstanden werden, dessen primäre Ausdehnung in zwei Dimensionen deutlich größer ist als in der dritten Dimension, also in seiner Dicke. Das Zellsubstrat kann aus verschiedenen Materialien bestehen, die für elektrochemische Anwendungen geeignet sind, wie beispielsweise Metalle, insbesondere Stahl mit hohem Chromanteil, oder Keramiken. Gemäß der vorliegenden Erfindung ist das flächig ausgebildete Zellsubstrat insbesondere ein Metallblech, welches durch seine flächige Form die Herstellung einer großflächigen elektrochemischen Zelle ermöglicht. Insbesondere kann ein strukturierten Stahlsubstrats, durch Walzen hergestellt werden. Die Strukturierung des flächig ausgebildeten Zellsubstrats erfolgt durch die Einbringung von Strukturelementen, welche die Oberfläche vergrößern, ohne die grundlegende flächige Form des Substrats zu verändern. Die flächige Ausbildung des Substrats bleibt also trotz der Strukturierung erhalten und ermöglicht die Integration der elektrochemischen Zelle in entsprechende Stacks oder Systeme.

Unter einer Erstreckung der Strukturelemente soll im Kontext der vorliegenden Erfindung insbesondere die räumliche Ausdehnung der Strukturelemente in das Zellsubstrat hinein verstanden werden. Da die Strukturelemente gemäß der Erfindung als Vertiefungen im Substrat ausgebildet sind, beschreibt die Erstreckung deren Tiefe, also den Abstand zwischen dem höchsten Punkt der Substratoberfläche und dem tiefsten Punkt des jeweiligen Strukturelements. Insbesondere erstreckt sich die Erstreckung in einer Richtung senkrecht zum flächigen Zellsubstrat. Die Erstreckung der Strukturelemente spielt eine entscheidende Rolle für die Leistungsfähigkeit der elektrochemischen Zelle, da sie die Oberfläche und damit die für elektrochemische Reaktionen verfügbare Fläche beeinflusst.

Durch die erfindungsgemäße Erstreckung wird sichergestellt, dass die Strukturelemente tief genug sind, um eine ausreichende Oberflächenvergrößerung zu erzielen, aber nicht so tief, dass die mechanische Stabilität des Substrats beeinträchtigt wird. Die genannten Parameterbereiche gewährleisten ein optimales Verhältnis zwischen Oberflächenvergrößerung und mechanischer Stabilität des Zellsubstrats.

Durch die in den Unteransprüchen aufgeführten Merkmale sind vorteilhafte Weiterbildungen der elektrochemischen Zelle möglich.

Die elektrochemische Zelle wird weiter verbessert durch eine weitgehend gleichmäßige Schichtdicke der ersten Elektrodenschicht. Die gleichmäßige Schichtdicke der ersten Elektrodenschicht führt zu einer homogenen Stromverteilung und minimiert lokale Überhitzungen, wodurch die Lebensdauer der elektrochemischen Zelle erhöht wird.

Es ist auch von Vorteil, wenn die Strukturelemente jeweils eine Erstreckung zwischen 60% und 300% einer Schichtdicke der ersten Elektrodenschicht aufweisen, bevorzugt zwischen 80% und 200%, besonders bevorzugt zwischen 90% und 100%. Diese Ausgestaltung der Erstreckung der Strukturelemente optimiert das Verhältnis zwischen Oberflächenvergrößerung und Elektrodendicke, was zu einer weiteren Verbesserung der Leistungsdichte und Effizienz der elektrochemischen Zelle führt.

Es ist weiterhin von Vorteil, wenn die Strukturelemente jeweils eine Breite entlang einer Haupterstreckungsrichtung des Zellsubstrats aufweisen, welche zwischen 70% und 130% ihrer Erstreckung beträgt, bevorzugt zwischen 80% und 120%, besonders bevorzugt zwischen 90% und 110%. Das definierte Verhältnis von Breite und Erstreckung der Strukturelemente sorgt für eine optimale Gasdiffusion und -verteilung innerhalb der elektrochemischen Zelle bzw. in ihren Funktionsschichten.

Unter einer Haupterstreckungsrichtung soll im Kontext der vorliegenden Erfindung insbesondere eine Richtung senkrecht zur Dicke des flächig ausgebildeten Zellsubstrats verstanden werden. In anderen Worten ist die Haupterstreckungsrichtung eine Richtung innerhalb einer gedachten Ebene, welche das flächige Zellsubstrat charakterisiert.

Die elektrochemische Zelle wird weiter verbessert dadurch, dass die Strukturelemente regelmäßig verteilt auf wenigstens einer Seite des Zellsubstrats angeordnet sind und ein Strukturelement zum nächstbenachbarten Strukturelement jeweils einen Abstand zwischen 100% und 700% einer Breite des Strukturelements entlang einer Haupterstreckungsrichtung des Zellsubstrats aufweisen, bevorzugt zwischen 200% und 500%, besonders bevorzugt zwischen 300% und 400%. Die regelmäßige Verteilung und der definierte Abstand der Strukturelemente gewährleisten eine homogene Stromdichteverteilung und minimieren unerwünschte Konzentrationspolarisationen.

Es ist auch von Vorteil, wenn zumindest ein Teil der Strukturelemente als Gruben im Zellsubstrat ausgebildet ist. Die Ausbildung der Strukturelemente als Gruben ermöglicht eine einfache Herstellung und bietet eine große Oberfläche für die elektrochemischen Reaktionen.

Unter einer Grube soll im Kontext der vorliegenden Erfindung insbesondere eine im Zellsubstrat ausgebildete, allseitig umschlossene Vertiefung verstanden werden. Diese Vertiefung dient als Strukturelement und trägt zur Vergrößerung der aktiven Oberfläche der elektrochemischen Zelle bei. Gruben unterscheiden sich von anderen Strukturelementen, wie beispielsweise Rillen, durch ihre im Wesentlichen geschlossene Form. Während Rillen eine längliche, offene Form aufweisen, sind Gruben in alle Richtungen begrenzt. Die Form der Gruben kann dabei variieren, beispielsweise kreisförmig, oval, quadratisch oder unregelmäßig sein. Die Gruben können in regelmäßigen oder unregelmäßigen Mustern auf dem Substrat angeordnet sein. Beispielsweise können die Gruben auf den Gitterpunkten eines gedachten, sich innerhalb einer dem Zellsubstrat zugeordneten, gedachten Ebene erstreckenden Gitters angeordnet sein, beispielsweise eine Rechteckgitter, eines Wabenmusters oder eines hexagonalen Gitters.

Es ist weiterhin von Vorteil, wenn zumindest ein Teil der Strukturelemente als Rillen im Zellsubstrat ausgebildet ist. Die Ausbildung der Strukturelemente als Rillen ermöglicht ebenfalls eine einfache Herstellung und bietet eine große Oberfläche für die elektrochemischen Reaktionen.

Unter einer Rille soll im Kontext der vorliegenden Erfindung insbesondere eine längliche, im Zellsubstrat ausgebildete Vertiefung verstanden werden. Diese Vertiefung dient als Strukturelement und trägt zur Vergrößerung der aktiven Oberfläche der elektrochemischen Zelle bei. Rillen zeichnen sich durch ihre ausgeprägte Längserstreckung aus, die deutlich größer ist als ihre Breite und Tiefe. Die Form der Rillen kann variieren, beispielsweise gerade, gebogen, mäanderförmig oder verzweigt. Bevorzugt sind Rillen, welche sich gradlinig entlang einer Haupterstreckungsrichtung des Zellsubstrats erstrecken. Insbesondere können Rillen in Form von parallelen Linien oder sich kreuzenden Strukturen ausgebildet sein. Die Rillen können in regelmäßigen oder unregelmäßigen Mustern auf dem Substrat angeordnet sein. Insbesondere können gradlinige Rillen zueinander parallel, bevorzugt äquidistant parallel angeordnet sein.

Die elektrochemische Zelle wird weiter verbessert dadurch, dass zumindest ein Teil der Strukturelemente als sich kreuzende Rillen ausgebildet ist. Sich kreuzende Rillen verbessern die Fluidverteilung und den Stofftransport innerhalb der Zelle zusätzlich.

Es ist auch von Vorteil, wenn ein erster Teil der Strukturelemente auf einer ersten Seite des Zellsubstrats angeordnet ist und ein zweiter Teil der Strukturelemente auf einer zweiten Seite des Zellsubstrats angeordnet ist. Das ermöglicht eine genaue Anpassung der Fluidführung in der elektrochemischen Zelle.

Es ist weiterhin von Vorteil, wenn zwischen den Strukturelementen auf der ersten Seite und den Strukturelementen auf der zweiten Seite zumindest abschnittsweise Öffnungen ausgebildet sind, welche für den Durchlass von Fluid von einer Seite zur jeweils anderen Seite vorgesehen sind. Die Öffnungen zwischen den Strukturelementen ermöglichen einen direkten Fluidtransport zwischen den beiden Seiten der Zelle und verbessern die Effizienz der elektrochemischen Reaktionen.

Die vorliegende Erfindung beschreibt weiterhin ein Verfahren zur Herstellung einer elektrochemischen Zelle gemäß der vorliegenden Erfindung, aufweisend die folgenden Schritte: Bereitstellen eines plattenförmigen Zellsubstrats, Strukturierung des Zellsubstrats durch Erzeugung einer Mehrzahl von Strukturelementen durch Abtragungsverfahren und/oder Umformung des plattenförmigen Zellsubstrats, Aufbringen der ersten Elektrodenschicht auf das strukturierte Zellsubstrat.

Dieses Verfahren ermöglicht eine kostengünstige und effiziente Herstellung der elektrochemischen Zelle mit den beschriebenen vorteilhaften Strukturelementen. Als Abtragungsverfahren sind insbesondere chemische, mechanische und/oder lasergestützte Abtragungsverfahren denkbar. Als Umformungsverfahren sind insbesondere Walzenprofilierung, Prägen und/oder Biegen denkbar.

Die vorliegende Erfindung beschreibt weiterhin eine Elektrolysezellenvorrichtung zur Gewinnung von Brennstoff aus wenigstens einem Grundstoff und elektrischen Strom, insbesondere Wasserstoff aus elektrischem Strom und Wasser, aufweisend wenigstens ein Elektrolysezellenstack, eine Grundstoffzuführung, insbesondere Wasserzuführung, weiter aufweisend eine Anodenabgasführung und Kathodenabgasführung sowie eine Steuerelektronik und Leistungselektronik, wobei der Elektrolysezellenstack wenigstens eine Elektrolysezelle aufweist, welche als elektrochemische Zelle gemäß der vorliegenden Erfindung ausgebildet ist.

Durch die Verwendung der erfindungsgemäßen elektrochemischen Zelle in der Elektrolysezellenvorrichtung wird eine höhere Effizienz und Leistungsdichte bei der Brennstoffgewinnung erreicht. Es wird eine effiziente und zuverlässige Wasserstoffproduktion ermöglicht.

Die vorliegende Erfindung beschreibt weiterhin eine Brennstoffzellenvorrichtung zur Gewinnung von elektrischen Strom aus einem Brennstoff, insbesondere Wasserstoff und/oder Erdgas, und Luft, aufweisend wenigstens ein Brennstoffzellenstack, eine Brennstoffzuführung, eine Luftzuführung, eine Anodenabgasführung und Kathodenabgasführung sowie eine Steuerelektronik und Leistungselektronik. Erfindungsgemäß weist die Brennstoffzellenvorrichtung ein Brennstoffzellenstack auf, welches wenigstens eine Brennstoffzelle aufweist, welche als elektrochemische Zelle gemäß der vorliegenden Erfindung ausgebildet ist. Die Verwendung der erfindungsgemäßen elektrochemischen Zelle in der Brennstoffzellenvorrichtung führt zu einer höheren Effizienz und Leistung der Brennstoffzelle.

Weiterhin ist der Einsatz der erfindungsgemäßen elektrochemischen Zelle in elektrochemischen Kompressoren sowie bei Gasseperationsverfahren denkbar.

### Zeichnungen

In den Zeichnungen sind Ausführungsbeispiele der elektrochemische Zelle, des Verfahrens zur Herstellung einer elektrochemischen Zelle, einer Elektrolysezellenvorrichtung sowie einer Brennstoffzellenvorrichtung dargestellt und in der nachfolgenden Beschreibung näher erläutert. Es zeigen
Figur 1 die elektrochemische Zelle gemäß der vorliegenden Erfindung in einer Schnittdarstellung,
Figuren 2 A und 2 B Varianten der elektrochemischen Zelle in einer Schnittansicht,
Figuren 3 A bis 5 weitere Varianten eines Zellsubstrats für die elektrochemische Zelle,
Figur 6 eine schematische Darstellung des Verfahrens zur Herstellung der elektrochemischen Zelle,
Figur 7 eine schematische Darstellung einer Elektrolysezellenvorrichtung mit einer elektrochemischen Zelle gemäß der vorliegenden Erfindung sowie
Figur 8 eine schematische Darstellung einer Brennstoffzellenvorrichtung mit einer elektrochemischen Zelle gemäß der vorliegenden Erfindung.

### Beschreibung

In den verschiedenen Ausführungsvarianten erhalten gleiche Teile die gleichen Bezugszahlen.

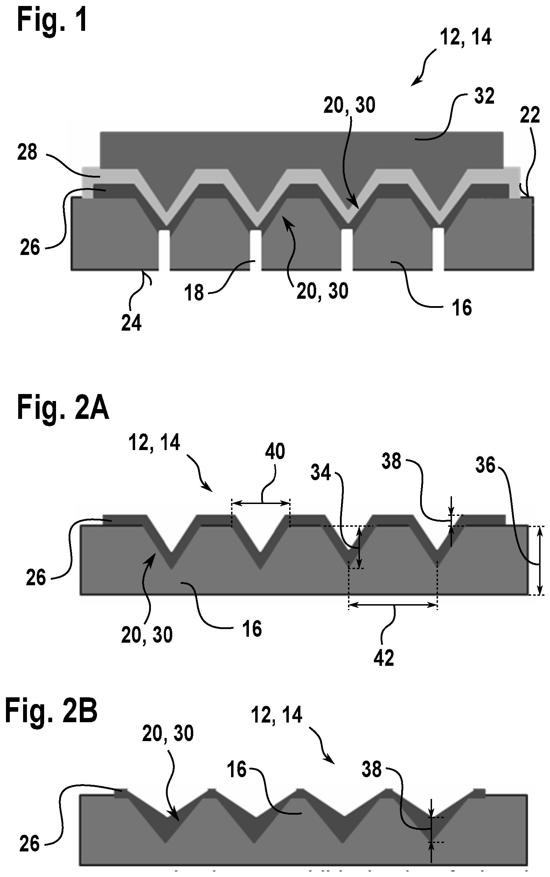

Figur 1 zeigt eine elektrochemische Zelle 12, welche beispielhaft als Elektrolysezelle 14 ausgebildet ist. Die elektrochemische Zelle 12 weist ein flächiges Zellsubstrat 16 auf, welches beispielhaft als ein ferritisches Metallsubstrat ausgebildet ist. Das Zellsubstrat 16 weist eine Mehrzahl an Strukturelementen 20 auf, welche beispielhaft als Rillen 30 ausgebildet sind. Die Strukturelement 20 sind in Ausführungsbeispiel auf einer ersten Seite 22 des Zellsubstrats 16 angeordnet. Die Strukturelemente 20 bzw. Rillen 30 erstrecken sich jeweils entlang einer Längserstreckungsrichtung und sind zueinander beispielhaft parallel angeordnet. In anderen Worten erstrecken sich die Strukturelemente 20 mit ihrer Längserstreckungsrichtung entlang einer Richtung, welche in einer durch die erste Seite 22 aufgespannten, gedachten Ebene. Insbesondere erstrecken sich die Strukturelemente 20 bzw. Rillen 30 im Ausführungsbeispiel entlang einer Haupterstreckungsrichtung des Zellsubstrats 16.

Figur 1 ist eine Schnittdarstellung der elektrochemischen Zelle 12 senkrecht zur Längserstreckungsrichtung der Rillen 30. Die Strukturelemente 20 bzw. Rillen 30 erstrecken sich also mit ihrer Längserstreckungsrichtung in die Bildebene hinein. Wie deutlich zu erkennen ist, weisen die Rillen 30 einen trichterförmigen Querschnitt auf. Beispielhaft ist der Querschnitt der Strukturelemente 20 bzw. Rillen 30 senkrecht zu ihrer Längserstreckungsrichtung weitgehend dreieckig ausgebildet. Im in Figur 1 gezeigten Ausführungsbeispiel hat der Querschnitt die Form eines gleichschenkligen Dreiecks, welches mit einem Scheitelwinkel bzw. Spitzenwinkel von 75° in das Zellsubstrat eintaucht, entsprechend sind an der ersten Seite die beiden Basiswinkel von 52,5° angeordnet.

Im Ausführungsbeispiel weist das Zellsubstrat 16 eine Mehrzahl von Öffnungen 18 auf, welche sich jeweils von einem Strukturelement 20 bis zur zweiten Seite 24 des Zellsubstrats 16 erstrecken. Im Ausführungsbeispiel erstrecken sich die Öffnungen 18 von einem Tiefpunkt der Rillen 30 bezüglich einer Substratdicke 36 (siehe Figur 2A) des Zellsubstrats 16 zur zweiten Seite 24.

Beispielhaft haben die Öffnungen 18 in der Ebene des Zellsubstrats 16 ein rundes Profil bzw. einen runden Querschnitt. Beispielhaft sind jedem Strukturelement 20 mehrere Öffnungen 18 zugeordnet, welche gleichmäßig verteilt entlang der Längserstreckungsrichtung des Strukturelements 20 angeordnet sind. Innerhalb der Ebene des Zellsubstrats 16 und senkrecht zur Längserstreckungsrichtung sind die Öffnungen 18 der unterschiedlichen Strukturelemente 20 benachbart angeordnet. In einer Draufsicht auf die Fläche des Zellsubstrats 16 sind die Strukturelemente 20 auf zueinander äquidistanten, gedachten Linien angeordnet, während die Öffnungen 18 einem an den gedachten Linien ausgerichteten, gedachten rechteckigen Gitternetz angeordnet sind. In Figur 1 verläuft die Bildebene gegen durch eine Reihe von Öffnungen 18.

Weiterhin weist die elektrochemische Zelle 12 eine erste Elektrodenschicht 26 auf, welche beispielhaft als Brennstoffelektrode ausgebildet ist. Die erste Elektrodenschicht 26 ist auf dem Zellsubstrat 16 angeordnet. Beispielhaft hat die erste Elektrodenschicht 26 eine nahezu konstante Schichtdicke 38, daher weist die erste Elektrodenschicht 26 einen Verlauf entlang der ersten Seite 22 bzw. ein Profil auf, welcher bzw. welches dem Zellsubstrat 16 mit den Strukturelementen 20 entspricht. Insbesondere weist die ersten Elektrodenschicht 26 Vertiefungen auf, welche den Strukturelementen 20 entsprechen.

Auf der ersten Elektrodenschicht 26 ist im Ausführungsbeispiel eine Elektrolytschicht 28 angeordnet. Auch die Elektrolytschicht 28 weist eine nahezu konstante Schichtdicke auf, daher weist ebenso die Elektrolytschicht 28 einen Verlauf entlang der ersten Seite 22 bzw. ein Profil auf, welcher bzw. welches dem Verlauf bzw. Profil der ersten Elektrodenschicht 26 und damit dem Zellsubstrat 16 mit den Strukturelementen 20 entspricht. Insbesondere weist die Elektrolytschicht 28 Vertiefungen auf, welche den Strukturelementen 20 entsprechen.

Auf der Elektrolytschicht 28 ist die zweite Elektrodenschicht 32 angeordnet. Diese hat keine konstante Schichtdicke, sie füllt die durch die Strukturelemente 20 in der Elektrolytschicht 28 geschaffenen Vertiefungen auf und bildet auf ihrer gegenüberliegenden Seite eine ebene Oberfläche aus.

Durch die durch Strukturelemente 20 auf die elektrochemisch aktiven Schichten der elektrochemischen Zelle 12 - genauer die erste Elektrodenschicht 26, die Elektrodenschicht 28 und zweite Elektrodenschicht 32 - aufgeprägten Strukturen schaffen so eine elektrochemisch aktive Fläche, welche gegenüber einem ebenen Schichtaufbau vergrößert ist.

Durch die Öffnungen 18 ist eine Versorgung der elektrochemisch aktiven Schichten, insbesondere der ersten Elektrodenschicht 26 mit einem Fluid von der zweiten Seite 24 möglich, weiterhin ist eine Entsorgung von Fluiden von den elektrochemisch aktiven Schichten, insbesondere von der ersten Elektrodenschicht 26 auf die zweite Seite 24 möglich.

Figur 2A gibt einen genaueren Überblick über die Struktur der Strukturelemente 20. Die in Figur 2A abgebildete elektrochemische Zelle 12 entspricht weitgehend der aus Figur 1, allein die erste Elektrodenschicht 26 unterscheidet sich durch ihre konstante Schichtdichte 38. Der Übersicht halber wurde in Figur 2A für die Bildebene ein Schnitt gewählt, welcher nicht durch die Öffnungen 18 geht, weiterhin wurden die Elektrolytschicht 28 und die zweite Elektrodenschicht 32 ausgeblendet. Im Ausführungsbeispiel hat das Zellsubstrat 16 eine Substratdicke 36 von 100 µm. Die Strukturelemente 20 haben beispielhaft eine Erstreckung 34 von 50% der Substratdicke 36. Weiterhin entspricht die Erstreckung 34 der Strukturelemente 20 beispielhaft 400% der Schichtdicke 38 der ersten Elektrodenschicht 26.

Beispielhaft haben die Strukturelemente 20 jeweils eine Breite 40 von 140% ihrer Erstreckung 34. Die Strukturelemente 20 sind in der Ebene des Zellsubstrats 16 beispielhaft parallel und äquidistant zueinander angeordnet. Im Ausführungsbeispiel haben die nächstbenachbarten Strukturelemente 20 jeweils einen Abstand 42 von 150% der Breite 40.

Figur 2B zeigt eine Variante der elektrochemischen Zelle 12 aus Figur 2A. Die Variante in Figur 2B hat eine erste Elektrodenschicht 26 mit variabler Schichtdicke 38. Dort hat die Elektrodenschicht 26 jeweils an den Tiefpunkten des Strukturelements 20 ihre größte Schichtdicke 38, welche mit dem Abstand senkrecht zur Längserstreckungsrichtung linear abnimmt. Am Tiefpunkt des Strukturelements 20 beträgt die Schichtdicke 38 beispielhaft 50% der Erstreckung 34 des Strukturelements 20. Oder umgekehrt betrachtet beträgt die Erstreckung 34 200% der maximalen Schichtdicke 38.

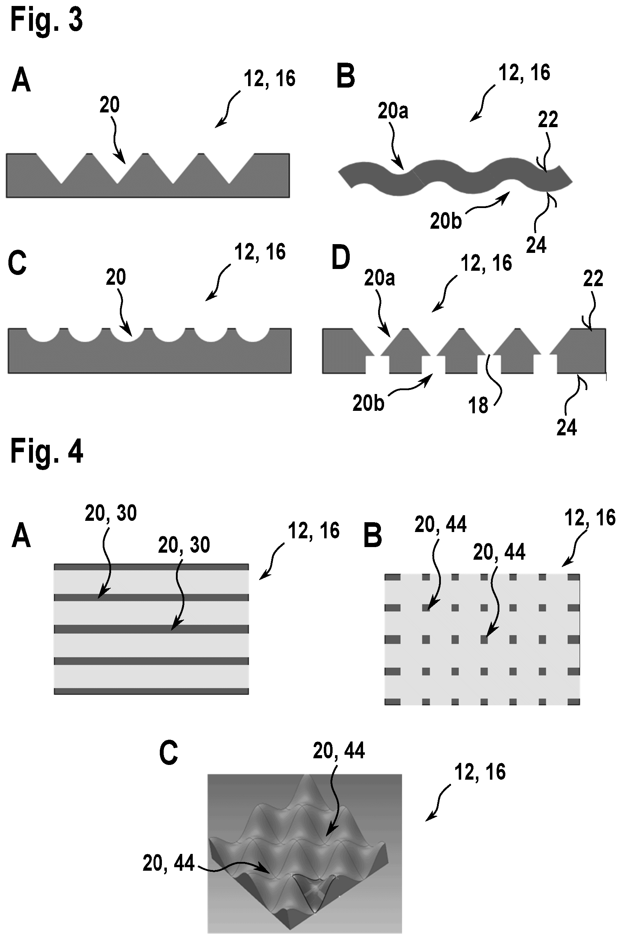

Figur 3 illustriert mehrere Varianten von möglichen Strukturelementen 20, in allen Varianten sind die Strukturelemente Rillen, welche sich in der Schnittdarstellung der Figur 3 mit ihrer Längserstreckungsrichtung in die Bildebene hinein erstrecken. Figur 3A zeigt ein Zellsubstrat 16 einer elektrochemischen Zelle, in welcher die Strukturelemente 20 einen trichterförmigen bzw. dreckigen Querschnitt aufweisen und auf der ersten Seite 22 angeordnet sind. Solche Strukturelemente 20 sind, ausgehend von einem flachen Substrat, beispielsweise einem gewalztem Blech, insbesondere mit Abtragungsverfahren herstellbar, beispielsweise durch chemische, mechanische oder lasergestützte Abtragungsverfahren.

Figur 3B zeigt ein Zellsubstrat 16 mit einer gewellten Struktur auf. Das Zellsubstrat 16 weist Strukturelemente 20 auf, welche senkrecht zur Längserstreckungsrichtung jeweils kuhlenförmig ausgebildet sind und welche zusammen senkrecht zur Längserstreckungsrichtung eine wellenförmige Oberfläche bzw. Seite 22, 24 des Zellsubstrats 16 ausbilden. Die zueinander unmittelbar benachbarten Strukturelemente 20 auf einer Seite 22 haben dabei beispielhaft einen Abstand 42 zueinander, welcher ihrer Breite 40 entspricht. Dabei weist das Zellsubstrat 16 einen ersten Teil von ersten Strukturelementen 20a auf der ersten Seite 22 und einen zweiten Teil von zweiten Strukturelementen 20b auf, wobei der erste Teil von ersten Strukturelementen 20a zum zweiten Teil von zweiten Strukturelementen 20b senkrecht zur Längserstreckungsrichtung um eine halbe Breite 40 bzw. einen halben Abstand 42 versetzt ist. Auf diese Weise ergibt sich eine wellenförmige Struktur des Zellsubstrats 16. Ein so strukturiertes Zellsubstrat 16 ist, ausgehend von einem flachen Substrat, beispielsweise einem gewalztem Blech, insbesondere mit einem Umformungsverfahren herstellbar, insbesondere durch Walzenprofilierung, Prägen und/oder Biegen.

Figur 3 C zeigt ein Zellsubstrat 16, welches auf der ersten Seite 22 Strukturelemente 20, welche im gezeigten Querschnitt ein halbkreisförmiges Profil haben. Solche Strukturelemente 20 sind insbesondere mit Abtragungsverfahren herstellbar.

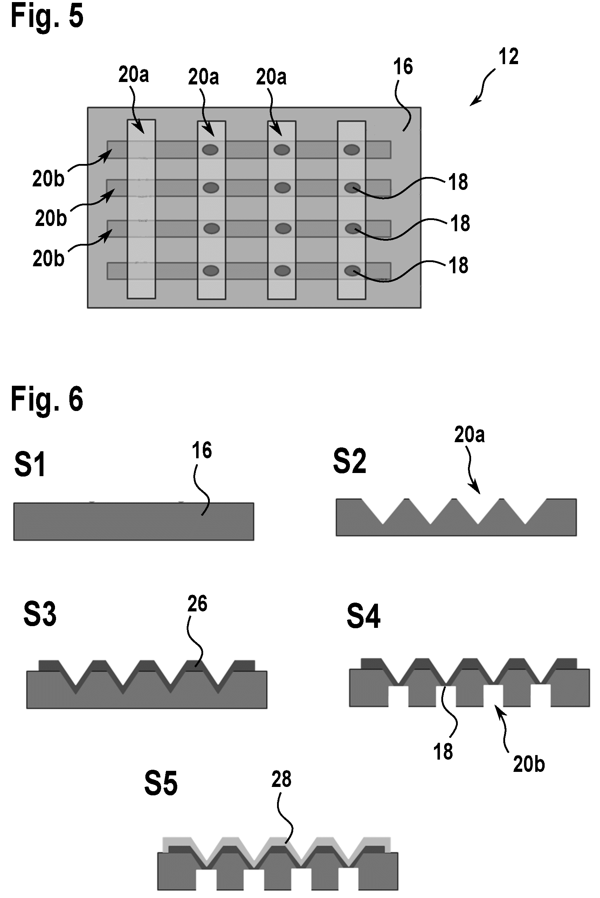

Figur 3 D zeigt ein Zellsubstrat 16, welches auf der ersten Seite 22 einen ersten Teil von ersten Strukturelementen 20a aufweist, welche im Querschnitt - ähnlich wie in der in Figur 3 A gezeigten Variante - ein trichterförmiges Profil aufweisen. Auf der zweiten Seite ist ein zweiter Teil von zweiten Strukturelementen 20b angeordnet, welche jeweils im Querschnitt ein rechteckiges Profil aufweisen. Die zweiten Strukturelemente 20b sind jeweils an den ersten Strukturelementen 20a angeordnet, in Summe weisen die ersten Strukturelemente 20a und die zweiten Strukturelemente 20b eine Erstreckung 34 auf, welche der Substratdicke 36 entspricht. Auf diese Weise ist zwischen jedem Paar aus ersten Strukturelement 20a und zweiten Strukturelement 20b eine Öffnung 18 ausgebildet. Figur 6 illustriert ein mögliches Herstellungsverfahren für eine elektrochemische Zelle 12 mit einem so strukturiertem Zellsubstrat 16.

Figur 4 zeigt weitere Ansichten von Varianten einer möglichen Struktur des Zellsubstrats 16. Figur 4 A zeigt eine Draufsicht auf einen Ausschnitt eines Zellsubstrats 16, auf welchen eine Mehrzahl von zueinander parallelen und äquidistanten Strukturelementen 20 angeordnet ist, welche als sich in einer Längserstreckungsrichtung - welche in der Abbildung von links nach rechts verläuft - erstrecken und als Rillen 30 ausgebildet sind.

Figur 4 B zeigt eine Draufsicht auf einen Ausschnitt eines Zellsubstrats 16, welches eine Mehrzahl von Strukturelementen 20 aufweist, welche als Gruben 44 ausgebildet sind. Die Gruben 44 in der Draufsicht beispielhaft eine rechteckige Form. Im gezeigten Ausführungsbeispiel sind die Gruben 44 auf den Gitterpunkten eines gedachten rechteckigen Gitters angeordnet.

Figur 4C zeigt eine perspektivische Ansicht eines Ausschnittes eines Zellsubstrats 16, welches eine Mehrzahl von Strukturelementen 20 aufweist, welche als Gruben 44 ausgebildet sind. Auch hier sind die Gruben 44 auf den Gitterpunkten eines gedachten rechteckigen Gitters angeordnet. Die Gruben 44 sind in diesem Ausführungsbeispiel, ähnlich wie die Rillen 30 in Figur 3 B, kuhlenförmig bzw. wellenförmig ausgebildet.

Figur 5 zeigt eine Draufsicht auf einen Ausschnitt eines Zellsubstrats 16 einer besonderen Varianten. Hier weist das Zellsubstrat 16 auf seiner ersten Seite 22 als Rillen 30 ausgebildete erste Strukturelemente 20a auf und auf seiner zweiten Seite 24 als Rillen 30 ausgebildete zweite Strukturelemente 20b auf. Die ersten Strukturelemente 20a sind zueinander jeweils parallel angeordnet. Die zweiten Strukturelemente 20b sind zueinander jeweils parallel angeordnet. Die ersten Strukturelemente 20a kreuzen sich mit den zweiten Strukturelementen 20b. Im gezeigten Ausführungsbeispiel sind die ersten Strukturelemente 20a im rechten Winkel zu den zweiten Strukturelementen 20b angeordnet. In anderen Worten ist die Längserstreckungsrichtung der ersten Strukturelemente 20a senkrecht zu der Längserstreckungsrichtung der zweiten Strukturelemente 20b ausgerichtet.

Weiterhin haben die zweiten Strukturelemente 20b und die ersten Strukturelemente 20a in Summe eine Erstreckung 34 auf, welche der Substratdicke 36 entspricht. Auf diese Weise ist an jedem Kreuzungspunkt aus ersten Strukturelement 20a und zweiten Strukturelement 20b eine Öffnung 18 ausgebildet. Auf diese Weise sind die Öffnungen 18 auf ein Gitterpunkten eines gedachten rechteckigen Gitters angeordnet.

Figur 6 illustriert ein Verfahren zur Herstellung einer elektrochemischen Zelle 12. Dazu wird in einem ersten Schritt S1 ein Zellsubstrat 16 bereitgestellt. Beispielhaft ist das Zellsubstrat 16 ein metallisches Zellsubstrats, ausgeführt als gewalztes Blech aus einem ferritischen Stahl mit einem Chromgehalt von beispielhaft 18%.

In einem zweiten Schritt S2 wird auf der ersten Seite 22 eine Mehrzahl von ersten Strukturelementen 20a erzeugt. Beispielhaft erfolgt dies durch Ätzen als chemisches Abtragungsverfahren.

In einem dritten Schritt S3 wird auf die strukturierte erste Seite 22 die erste Elektrodenschicht 26aufgebracht. Beispielhaft ist die erste Elektrodenschicht 26 eine Brenngaselektrodenschicht. Beispielhaft wird die erste Elektrodenschicht 26 aufgedruckt. Im Ausführungsbeispiel beträgt die Nassschichtdicke der ersten Elektrodenschicht 26 zunächst 40 µm. Im getrockneten und gesinterten Zustand beträgt die Trockenschichtdicke der erste ersten Elektrodenschicht 26 etwa 20 µm. In Varianten beträgt die Nassschichtdicke der ersten Elektrodenschicht 26 bevorzugt zwischen 1,0 µm und 100,0 µm, besonders bevorzugt zwischen 10 µm und 50 µm, was eine bevorzugte Trockenschichtdicke im getrockneten und gesinterten Zustand zwischen 0,5 µm und 50 µm ergibt, besonders bevorzugt zwischen 5 µm und 25 µm. Beispielhaft wird die erste Elektrodenschicht 26 mittels Siebdruck aufgetragen. Anschließend wird die erste Elektrodenschicht 26 vollständig getrocknet, alternativ zumindest teilweise getrocknet. Im Ausführungsbeispiel weist die erste Elektrodenschicht 26 bzw. ihre Suspension NiO-CGO auf. Anschließend wird die erste Elektrodenschicht unter 1100°C versintert. Die Korngrößen, Mischungsverhältnisse und Additive sind so gewählt, dass beim Sintern eine möglichst leistungsfähige und ausreichend alterungsstabile Mikrostruktur der ersten Elektrodenschicht 26 erzielt wird.

In einem folgenden vierten Schritt S4 wird auf der zweiten Seite 24 eine Mehrzahl von zweiten Strukturelementen 20b erzeugt. Beispielhaft erfolgt dies durch Laserbohren. Dabei werden die zweiten Strukturelemente 20b so gebohrt, dass sie zusammen mit den ersten Strukturelementen 20a in Summe eine Erstreckung 34 aufweisen, welche der Substratdicke 36 entspricht. Auf diese Weise werden zwischen Paaren von ersten Strukturelementen 20a und zweiten Strukturelementen 20b Öffnung 18 ausgebildet.

Anschließend wird in einem fünften Schritt S5 auf die erste Elektrodenschicht 26 eine Elektrolytschicht 28 durch einen Sputterprozess abgeschieden. Die zweite Elektrolytschicht 28 weist im Ausführungsbeispiel eine Dicke von 2 µm auf. In Varianten beträgt die Dicke der zweiten Elektrolytschicht 28 zwischen 1 µm und 3 µm Dicke. Beispielhaft wird die zweite Elektrolytschicht 28 mittels reaktivem Magnetron Sputtering aufgetragen. Beispielhaft wird dazu ein Target mit einer metallischen Legierung aus 80 At.-% Zr, 18 At.-% Sc und 2 At.-% Y verwendet. Sc und Y sind Zusatzmetalle, welchen dazu vorgesehen sind, in der Elektrolytschicht 28 das Zirkoniumoxid zu stabilisieren bzw. dieses zu dotieren. Die Menge der Zusatzmetalle im Target beträgt also 20 At.-% bezüglich der Metalle des Targets.

Beispielhaft wird als Prozessgas Argon mit einem zwischen 2 Mol-% und 4 Mol-% variierenden Anteil von Sauerstoff. Der Sauerstoffanteil wird dabei nach der Kathodenspannung geregelt. Beispielhaft wird die Kathodenspannung in einem Bereich zwischen 415 V und 435 V gehalten, indem der Sauerstoffanteil während des Sputterprozesses stufenweise zwischen 2,5 Mol-% und 3,7 Mol-% erhöht wird. Beispielhaft dauert der Beschichtungsprozess etwa 25 Minuten.

Das Prozessgas steht dabei beispielhaft unter einem Druck von 8 µbar, das Sputtern wir beispielhaft mit einer Leistung von 500 W durchgeführt. Im Ausführungsbeispiel weist die Elektrolytschicht 28 als Elektrolytmaterial ScYSZ auf, in Varianten sind beispielsweise ScSZ, ScYAlSz oder ScCeSZ denkbar.

In einem folgenden, in Figur 6 nicht mehr abgebildeten Schritt wird die zweite Elektrodenschicht 32 auf die Elektrolytschicht 28 aufgebracht. Die zweite Elektrodenschicht 32 weist im Ausführungsbeispiel beispielhaft die Luftelektrode auf. Vorteilhaft wird auf die zweite Elektrodenschicht 32 eine Stromsammler-Schicht bzw. Kontaktschicht aufgebracht. Beispielhaft wird sowohl die zweite Elektrodenschicht 32 als auch die Kontaktschicht mittels eines suspensionsbasierten Prozesses aufgetragen, z.B. Siebdruck. Die zweite Elektrodenschicht 32 weist beispielsweise LSC-CGO auf. Die Kontaktschicht weist beispielhaft LSC auf. Optional kann ein weiterer Sinterschritt folgen, bei welchem die Sinterung bei einer Temperatur unterhalb der Temperatur erfolgt, die für die Sinterung der ersten Elektrodenschicht 26 eingesetzt worden war.

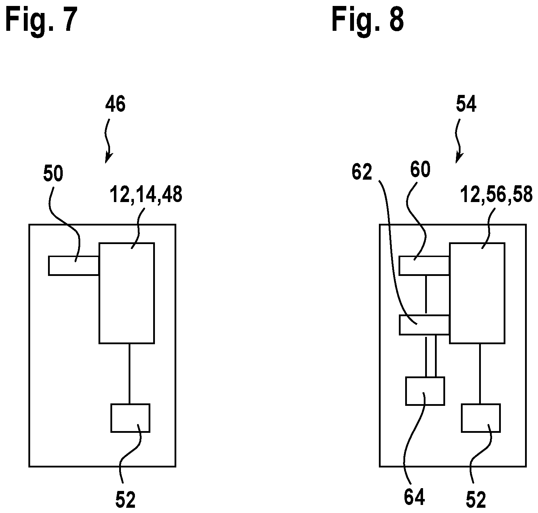

Figur 7 zeigt eine Elektrolysezellenvorrichtung 46 zur Gewinnung von Wasserstoff aus elektrischem Strom und Wasser. Die Elektrolysezellenvorrichtung 46 weist einen Elektrolysezellenstack 48 auf, welcher wiederum eine Mehrzahl von übereinandergeschichteten Elektrolysezellen 14 aufweist. Beispielhaft sind die Elektrolysezellen 14 als Hochtemperatur-SOEC ausgebildet. Der Elektrolysezellenstack 48 wird über eine Wasserzuführung 50 mit Wasser versorgt und über eine Leistungselektronik 52 mit elektrischem Strom. Nicht abgebildet ist eine Steuerelektronik zur Steuerung und Regelung der Elektrolysezellenvorrichtung.

Figur 8 zeigt eine Brennstoffzellenvorrichtung 54 zur Gewinnung von elektrischem Strom aus Wasserstoff und Luft. Die Brennstoffzellenvorrichtung 54 weist einen Brennstoffzellenstack 56 auf, welcher eine Vielzahl von übereinandergeschichteten elektrochemischen Zellen 12 aufweist, welche als Brennstoffzellen 58 ausgebildet sind. Beispielhaft sind die Brennstoffzellen 58 als Hochtemperatur-SOFC ausgebildet. Der Brennstoffzellenstack 56 wird über eine Brennstoffzuführung 60 mit Wasserstoff und über eine Luftzuführung 62 mit Luft versorgt. Der Wasserstoff und die Luft werden dabei mittels einer Steuerelektronik 64 dosiert, welche dazu entsprechende Ventile und Gebläse ansteuert. Die von dem Brennstoffzellenstack 56 abgegriffene Spannung wird über eine Leistungselektronik 52 einem Bedarf entsprechend umgewandelt.

## Patentansprüche

1. Elektrochemische Zelle (12), insbesondere Elektrolysezelle (14), aufweisend ein Zellsubstrat (16), eine erste Elektrodenschicht (26), eine zweite Elektrodenschicht (32), eine zwischen der ersten Elektrodenschicht (26) und zweiten Elektrodenschicht (32) angeordnete Elektrolytschicht (28), wobei das Zellsubstrat (16) flächig ausgebildet ist und eine Mehrzahl an Strukturelementen (20) aufweist, **dadurch gekennzeichnet, dass** sich die Strukturelemente (20) in das Zellsubstrat (16) hinein absenken und jeweils eine Erstreckung (34) zwischen 20% und 80% einer Substratdicke (36) des Zellsubstrats (16) aufweisen, bevorzugt zwischen 30% und 70%, besonders bevorzugt zwischen 40% und 60%.

2. Elektrochemische Zelle (12) nach Anspruch 1, **dadurch gekennzeichnet, dass** die erste Elektrodenschicht (26) eine weitgehend gleichmäßige Schichtdicke (38) aufweist.

3. Elektrochemische Zelle (12) nach einem der vorhergehenden Ansprüche, **dadurch gekennzeichnet, dass** die Strukturelemente (20) jeweils eine Erstreckung (34) zwischen 60% und 300% einer Schichtdicke (38) der ersten Elektrodenschicht (26) aufweisen, bevorzugt zwischen 80% und 200%, besonders bevorzugt zwischen 90% und 100%.

4. Elektrochemische Zelle (12) nach einem der vorhergehenden Ansprüche, **dadurch gekennzeichnet, dass** die Strukturelemente (20) jeweils eine Breite (40) entlang einer Haupterstreckungsrichtung des Zellsubstrats (16) aufweisen, welche zwischen 70% und 130% ihrer Erstreckung (34) beträgt, bevorzugt zwischen 80% und 120%, besonders bevorzugt zwischen 90% und 110%.

5. Elektrochemische Zelle (12) nach einem der vorhergehenden Ansprüche, **dadurch gekennzeichnet, dass** die Strukturelemente (20) regelmäßig verteilt auf wenigstens einer Seite (22, 24) des Zellsubstrats (16) angeordnet sind und ein Strukturelement (20) zum nächstbenachbarten Strukturelement (20) jeweils einen Abstand (42) zwischen 100% und 700% einer Breite (40) des Strukturelements (20) entlang einer Haupterstreckungsrichtung des Zellsubstrats (16) aufweisen, bevorzugt zwischen 200% und 500%, besonders bevorzugt zwischen 300% und 400%.

6. Elektrochemische Zelle (12) nach einem der vorhergehenden Ansprüche, **dadurch gekennzeichnet, dass** zumindest ein Teil der Strukturelemente (20) als Gruben (44) im Zellsubstrat (16) ausgebildet sind.

7. Elektrochemische Zelle (12) nach einem der vorhergehenden Ansprüche, **dadurch gekennzeichnet, dass** zumindest ein Teil der Strukturelemente (20) als Rillen (30) im Zellsubstrat (16) ausgebildet sind.

8. Elektrochemische Zelle (12) nach Anspruch 7, **dadurch gekennzeichnet, dass** zumindest ein Teil der Strukturelemente (20) als sich kreuzende Rillen (30) ausgebildet sind.

9. Elektrochemische Zelle (12) nach einem der vorhergehenden Ansprüche, **dadurch gekennzeichnet, dass** ein erster Teil der Strukturelemente (20) auf einer ersten Seite (22) des Zellsubstrats (16) angeordnet ist und ein zweiter Teil der der Strukturelemente (20) auf einer zweiten Seite (24) des Zellsubstrats (16) angeordnet ist.

10. Elektrochemische Zelle (12) nach Anspruch 9, **dadurch gekennzeichnet, dass** zwischen den Strukturelementen (20) auf der ersten Seite (22) und den Strukturelementen (20) auf der zweiten Seite (24) zumindest abschnittsweise Öffnungen (18) ausgebildet sind, welche für den Durchlass von Fluid von einer Seite (22, 24) zur jeweils anderen Seite (24, 22) vorgesehen sind.

11. Verfahren zur Herstellung einer elektrochemischen Zelle (12) nach einem der vorhergehenden Ansprüche, aufweisend die folgenden Schritte: Bereitstellen (S1) eines plattenförmigen Zellsubstrats (16), Strukturierung (S2) des Zellsubstrat, (16) durch Erzeugung einer Mehrzahl von Strukturelementen () durch Abtragungsverfahren und/oder Umformung des plattenförmigen Zellsubstrats (16), Aufbringen (S3) der ersten Elektrodenschicht (26) auf das strukturierte Zellsubstrat (16).

12. Elektrolysezellenvorrichtung (46) zur Gewinnung von Brennstoff aus wenigstens einem Grundstoff und elektrischen Strom, insbesondere Wasserstoff aus elektrischem Strom und Wasser, aufweisend wenigstens ein Elektrolysezellenstack (48), eine Grundstoffzuführung, insbesondere Wasserzuführung (50), weiter aufweisend eine Anodenabgasführung und Kathodenabgasführung sowie eine Steuerelektronik und Leistungselektronik (52), wobei der Elektrolysezellenstack (48) wenigstens eine Elektrolysezelle (14) aufweist, welche als elektrochemische Zelle (12) nach einem der Ansprüche 1 bis 10 ausgebildet ist.
